# FASCICULE DE BREVET EUROPEEN

(11) **EP 1 476 343 B1**
(45) Date de publication et mention de la délivrance du brevet: **03.05.2006**
(21) Numéro de dépôt: 03702225.8
(22) Date de dépôt: 10.02.2003
(51) Int. Cl.: B62B 1/14, B62B 3/06

(54) **ENGIN DE MANUTENTION DE TYPE DIABLE**
HEBEVORRICHTUNG SOWIE SACKKARRE
HAND TRUCK MATERIALS HANDLING DEVICE

(30) Priorité: 08.02.2002 BE 200200078
(43) Date de publication de la demande: 17.11.2004
(73) Titulaire: Carton de Tournai, Francois Xavier, 7941 Attre (BE)
(72) Inventeur: Carton de Tournai, Francois Xavier, 7941 Attre (BE)
(74) Mandataire: Colens, Alain M.G.M.
(86) Numéro de dépôt international: PCT/BE2003/000022
(87) Numéro de publication internationale: WO 2003/066408

(56) Documents cités:
- EP-A- 0 553 086
- WO-A-98/30428
- DE-A- 2 530 634
- FR-A- 1 365 474
- US-A- 3 578 353
- US-A- 4 737 065
- US-A1- 2001 038 786

## Description

La présente invention concerne un diable transpalette pouvant être utilisé comme gerbeur autogrimpant par l'avant, pour atteindre une plateforme surélévée ou un plancher de véhicule, ou autogrimpant par l'arrière pour franchir une ou plusieurs marches.

On connaît déjà un gerbeur transpalette autogrimpant par le document EP 0 553 086. Le dispositif proposé ne permet cependant pas de déposer entièrement des charges sur un plancher de véhicule s'il y a un pare-choc, un marche-pied ou une attache-boule trop encombrant. En cas de mauvaise manipulation, le gerbeur peut glisser et même basculer en arrière, surtout si la charge faisant contre-poids est insuffisante ou la montée du bâti de base trop rapide.

Pour remédier à ces inconvénients l'invention propose un diable-gerbeur qui est muni notamment d'une béquille arrière télescopique solidaire d'un bâti support de charge apte à coulisser sur un bâti central supportant les deux roues latérales du dispositif. De nombreux autres avantages du dispositif selon l'invention apparaîtront à l'examen de la description plus détaillée qui suit.

Dans la description qui suit, l'avant de l'engin se trouve du côté de la charge manipulée , l'arrière de l'engin se trouve du côté de l'utilisateur (conducteur).

L'invention propose selon les termes de la revendication 1 un engin de manutention et de levage de charge comprenant un bâti présentant un support de charge ainsi qu'un moyen de roulement, et coulissant sur un bâti fixe muni d'au moins deux roues et muni d'un système de levage du bâti coulissant le long d'un chemin de guidage prévu sur ledit bâti fixe. L'ensemble est susceptible d'être poussé ou tiré par un opérateur et d'être basculé autour d'un axe desdites roues. Le bâti fixe est également muni à sa base de deux pieds stabilisateurs munis de roulettes de préférence pivotantes et s'étendant en direction du support de charge, lesdits pieds stabilisateurs pouvant coulisser sous le bâti fixe. Le bâti coulissant est solidarisé directement ou indirectement à une béquille télescopique opposée au support de charge et comprenant au moins une roue pivotante à son extrémité.

Le chemin de guidage peut être incliné par rapport à la perpendiculaire d'un angle compris entre 5 et 25°. La béquille télescopique peut être orientable et le système de levage peut être motorisé. La roue pivotante de la béquille peut comprendre un moyen de blocage d'orientation.
L'orientation et le télescopage de la béquille peuvent être indépendamment contrôlée et dans lequel des moyens de blocage de ladite orientation ou dudit télescopage sont prévus. La béquille est solidarisée au bâti coulissant par une articulation et/ou une liaison coulissante.

L'invention concerne également, selon les termes de la revendication 8, un procédé d'autogrimpage de l'engin selon l'invention comprenant les étapes suivantes
- le support est levé avec le bâti coulissant à hauteur d'une plateforme,
- le support est avancé sur cette plateforme puis prend appui sur celle-ci,
- les pieds stabilisateurs sont alors ramenés vers l'arrière du bâti,
- la béquille en extension est déployée manuellement ou par effet de gravité jusqu'à contact avec le sol,
- le bâti fixe est monté à hauteur de la plateforme
- les pieds stabilisateurs repassent sous la plaque de support ,
- l'ensemble est avancé sur la plate-forme avec rétraction de la béquille téléscopique.

Le dispositif selon l'invention est donc composé d'un bâti central sur lequel repose un système de levage (motorisé ou non) connu en soi, et comprenant un chemin de guidage pour le levage d'un bâti mobile support de charge. Les roues, par exemple avec pneus, sont d'un diamètre tel qu'ils facilitent le déplacement de l'engin sur toute surface (gravier, terre, etc..). De préférence, le chemin de guidage n'est pas situé tout à fait verticalement vis à vis du sol mais est légèrement incliné vers l'arrière ( p.e. entre 10° et 25°).

Il en résulte que lors du levage, le centre de gravité de l'ensemble se déplace vers l'arrière et peut facilement être maintenu plus ou moins au dessus de l'axe des roues par pivotement contrôlé par le conducteur, ce dernier aspect reflétant le principe de manutention d'un diable classique.

A la base et à l'avant du bâti central se trouvent un ou plusieurs éléments horizontaux appelés "pieds stabilisateurs", débordant vers l'avant et munis à l'extrémité d'un moyen de roulement qui est de préférence pivotant pour permettre à l'engin de pouvoir tourner en position gerbeur sans devoir être incliné vers l'arrière. Ces éléments horizontaux qui sont, selon une mode de réalisation préféré de l'invention, au nombre de deux peuvent par ailleurs coulisser vers l'arrière et sont avantageusement situés entre les éléments de, ou de renfort au, support de charge (fourche ou plaque).

Le bâti coulissant comprend donc un support de charge s'étendant essentiellement horizontalement vers l'avant sous la forme d'un plateau ou de fourches ou d'un plateau adapté à un système de fourche de manière connue. En dessous de ce système de support de charge est fixé un train de roulage p.e. sous la forme de galets. Ce train de roulage est avantageusement inclinable vers le bas et muni d'un système de frein automatique d'une part et d'un système de blocage en position basse d'autre part, p.e. comme décrit pour le chariot-élévateur décrit dans le brevet européen 0 809 600 B1.

Essentiellement perpendiculaire au support de charge et vers l'arrière, on prévoit un tablier, qui est une surface apte à retenir la charge lors de l'inclinaison arrière. Ce tablier peut être un cadre plein, ou ajouré, ou un cadre entourant un grillage rigide.

Le bâti coulissant selon l'invention comprend également une béquille arrière télescopique, muni à sa base d'une ou de plusieurs roues, de préférence librement pivotantes, ou plus avantageusement pivotantes avec possibilité de blocage.

De préférence cette béquille arrière télescopique est également orientable. Il peut s'agir de un, ou deux tubes télescopiques reliés entre eux, et solidaire, via une liaison télescopique ou articulée, de la fourche et/ou du cadre perpendiculaire définissant le tablier. Le tout forme le bâti coulissant. La liaison est de préférence coulissante et/ou articulée et un moyen de blocage est prévu, ce qui permet de prévoir un système simple pour modifier l'orientation de la béquille.

La partie arrière haute du bâti, plus particulièrement du ou des logements du système télescopique de la béquille, comprend une poignée ou un timon de guidage et le système de commande de levée ou de descente du chariot fourche de l'engin. Ce système peut avantageusement être installé sur une entretoise rigide liant la partie supérieure des tubes de logement. On y intégrera également le système de blocage du coulissement vertical de la béquille arrière et le système de blocage de l'écartement de cette même béquille arrière.

La concentration de la plupart des commandes de l'engin selon l'invention sur cette structure permet une coordination efficace et opportune des différents mouvements de cet engin. Il est par exemple possible en débloquant les systèmes de blocage de la béquille arrière de maintenir la hauteur de la boîte de commande constante pendant que l'on commande l'élévation du châssis fourche. De plus, dans le cas du basculement arrière, avec levée de charge, il est possible d'adapter la hauteur de la poignée de basculement à la hauteur désirée par l'utilisateur. Le déploiement de la béquille télescopique peut en effet être bloqué à une hauteur déterminée.

On comprendra que le système d'élévation de la charge fait en sorte que le centre de gravité de la charge étant plus élevé, le diable en charge peut plus facilement basculer vers l'arrière. Cet effet est accru par le fait qu'en soulevant la charge, le centre de gravité se déplace vers l'arrière étant donné que le mât de guidage du bâti central est incliné vers l'arrière.

On comprendra aussi qu'en position surélevée de la charge, la poignée de guidage qui se trouve en position haute solidaire du bâti coulissant, offre un bras de levier plus important pour procéder au basculement vers l'arrière.

Lors du basculement arrière de la charge par le conducteur, ce dernier dispose d'un système de freinage des roues du diable qui bloque ces dernières et évite ainsi que le diable ne recule lorsqu'on le tire vers l'arrière pour le faire basculer. Le conducteur est toujours bien en appui sur ses deux pieds du fait qu'il ne doit pas bloquer l'appareil avec un pied lors de la traction arrière comme c'est le cas avec un diable traditionnel lorsqu'il doit déplacer une charge d'un certain poids.

Contrairement à de nombreux diables le centre de gravité du plateau de chargement est sensiblement plus éloigné du point de basculement du fait que le plateau est très sensiblement plus long que pour un diable traditionnel, ce qui sans les dispositifs de l'invention rendrait plus important l'effort de basculement.

Une fois la charge basculée, il y a lieu de réduire au maximum les efforts du conducteur. La béquille arrière télescopique a pour but, entre autres, d'épargner au conducteur des efforts de retenue de charge aussi bien vers l'avant que vers l'arrière et pour cela il y a lieu de répartir le poids un peu plus sur la béquille arrière. L'encombrement de la charge à manipuler pouvant fortement varier d'une charge à l'autre, le point de basculement et l'inclinaison idéale de retenue de charge varié également d'une charge à l'autre. Grâce à la possibilité de variation de la hauteur de basculement et grâce à la béquille arrière télescopique on peut trouver le meilleur compromis d'inclinaison pour une charge déterminée tenant compte des impératifs du sol (plat, incliné ou en escalier), et de la taille du conducteur.

Dans l'engin selon l'invention, lors de l'élévation de la charge le centre de gravité se déplace vers l'arrière, vers les roues, ce qui diminue le risque de basculement avant lors d'un déplacement vers l'avant charge levée que pour un élévateur conventionnel ou la levée de la charge est verticale.

La plupart des élévateurs du type gerbeur utilisent une ou plusieurs roues arrières pivotantes pour faire tourner la machine. Dans le gerbeur traditionnel, la ou les roues pivotantes sont à l'arrière et en bout des pieds stabilisateurs sont prévus des roues fixes d'où la machine tournera plutôt autour d'un de ces points fixes.

Dans l'engin selon l'invention en position diable, ce sont les roues latérales fixes qui permettent principalement de faire tourner le machine. Dans le cas d'une utilisation en tant que gerbeur, les pieds stabilisateurs peuvent être munis, à l'avant, de roulettes pivotantes permettant le pivotement sur place.

L'engin selon l'invention permet l'autogrimpage vers l'avant pour accéder à un quai ou au plancher d'un véhicule.

Un processus d'autogrimpage par l'arrière permet de franchir des petits niveaux, par exemple des marches.

Comme pour le cas de l'engin décrit dans le document EP 0 553 086, l'engin selon l'invention utilise un système de pieds stabilisateurs rétractables pour permettre à l'engin, après y avoir fait reposer la charge, de se hisser à hauteur du niveau supérieur et, par après, de s'y déplacer.

Toutefois dans le document de l'art antérieur l'opération n'est possible qu'à condition que la fourche soit lestée d'une charge d'un poids certain pour éviter le basculement arrière. L'engin selon l'invention peut effectuer cette opération en charge ou à vide grâce à la béquille arrière.

La présence d'une béquille arrière dans l'engin de l'invention procure en effet de nombreux avantages.

Ainsi, pour l'autochargement, la charge peut ne pas pouvoir être entièrement placée sur le niveau supérieure car des obstacles tels un pare-choc, un marche-pied ou une attache-remorque peuvent empêcher le support de charge de s'engager au maximum sur ce niveau. Une partie de la charge est alors en porte à faux. La béquille arrière permet non seulement le maintien de la machine en équilibre malgré le porte à faux de la charge, mais il permet par la prise d'appui sur l'extrémité des fourches et sur la béquille arrière d'également monter le bâti de la machine à une certaine distance du plancher de la camionnette, évitant ainsi l'obstacle (pare-choc, ), et de pousser l'entièreté de la palette sur le plancher. Cette manoeuvre n'est pas possible avec l'engin de l'art antérieur susmentionné.

L'invention sera mieux comprise à l'examen des dessins annexés d'un exemple de réalisation d'un engin selon l'invention, dessins dans lesquels :
les fig. 1 et 2 représentent une vue en perspective de l'avant l'engin selon l'invention en position basse avec tablier opérationnel ou relevé
la fig. 3 représente une vue en perspective de l'arrière de l'engin selon l'invention en position basse
la fig. 4 représente une vue en perspective de l'arrière du même engin avec le support de charge relevé
la fig. 5 représente schématiquement sous la forme d'une séquence le chargement et l'autogrimpage par l'avant de l'engin selon l'invention
la fig. 6 représente l'engin en position diable en appui sur la béquille arrière
la fig. 7 représente une variante en position diable, béquille déployée ou non
la fig. 8 représente schématiquement sous la forme d'une séquence l'autogrimpage d'une marche par l'arrière

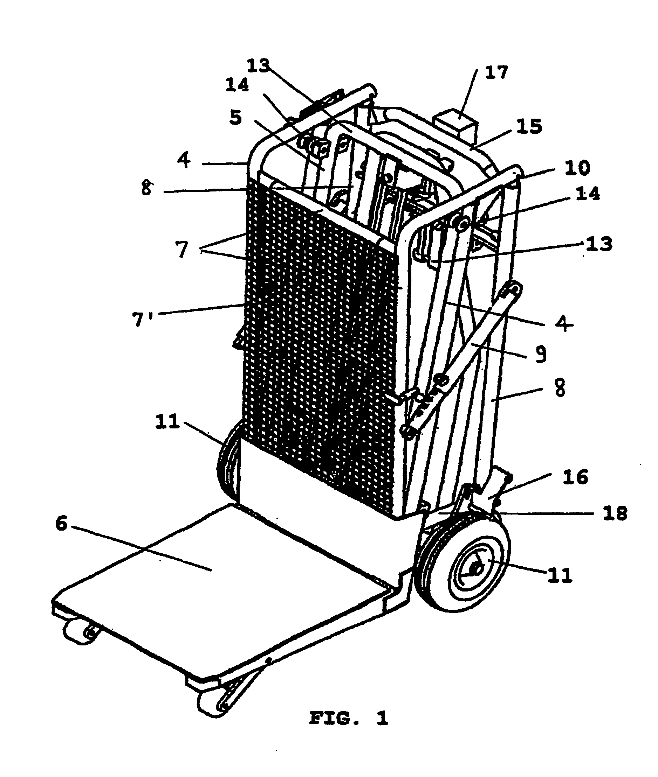

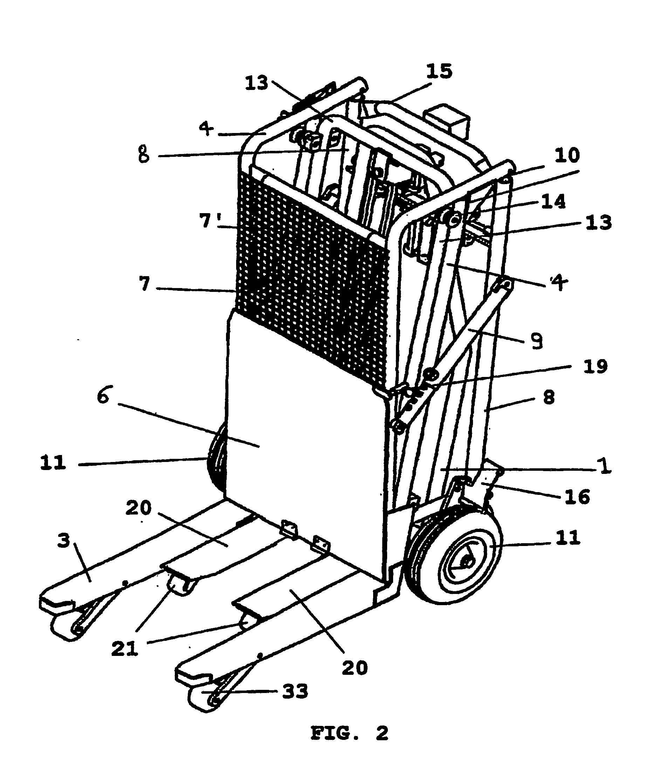

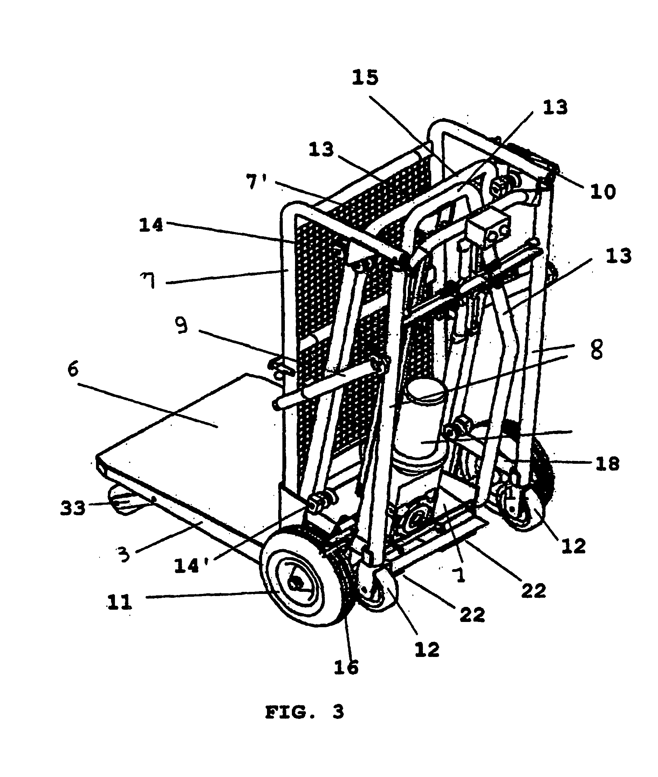

Dans les figs. 1 à 4 on distingue un bâti de base 1 avec des éléments tubulaires 13 fixes monté sur deux roues 11 et muni d'un moteur 2 de levage, par exemple par chaîne (non représentée). Un bâti coulissant 4 est agencé au bâti fixe, en coulissement le long d'un chemin de guidage 5 intégré au bâti 1 et incliné par rapport à la verticale au sol. Le bâti coulissant 4 comprend une structure tubulaire 7 coulissante avec à sa base un support de charge horizontal 6 s'avancant vers l'avant, un tablier perpendiculaire sous la forme d'un cadre 7' avec grille et une double béquille arrière 8 télescopique. Le bâti coulissant comprend également un timon 15 permettant à l'opérateur de manipuler l'engin. Le cadre 7 et le bâti 1 est connecté à la béquille 8 par une liaison coulissante 9 articulée aux extrémités, et un axe de pivotement 10 à son sommet. La béquille double comprend deux roues pivotantes 12 à ses extrémités.

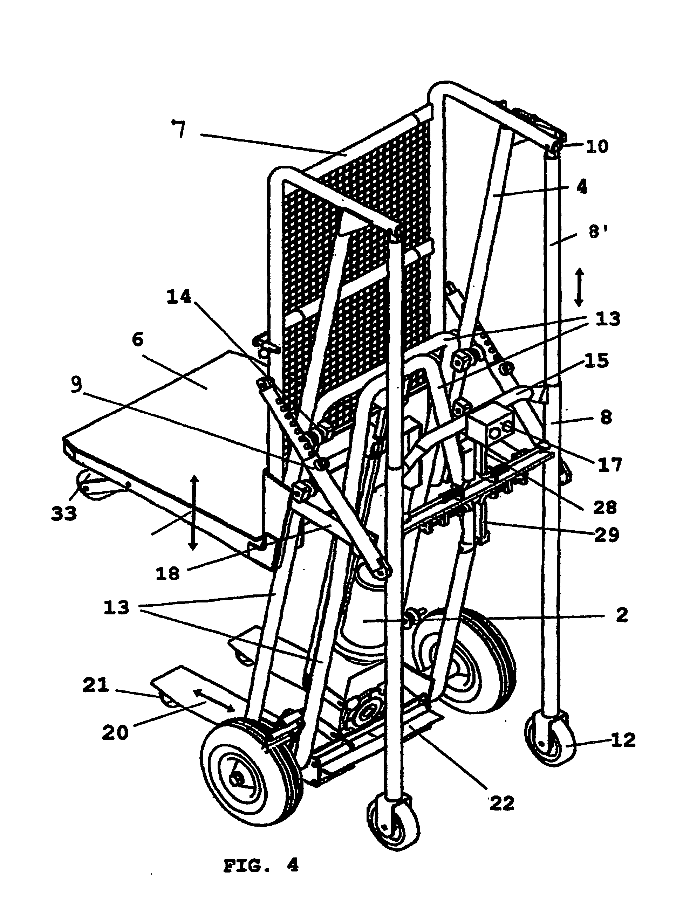

La structure tubulaire 13 comprend un chemin de guidage 5 pour la structure coulissante 4. A cet effet des galets de coulissement 14, 14' sont prévus de part et d'autre.
On distingue également une boîtier de commande principal 17 pour actionner le levage via le moteur 2. Une poignée 28 (fig. 4) est prévue pour commander le blocage du déploiement télescopique de la béquille et une poignée 29 pour contrôler l'orientation de la béquille 8.

Un frein 16 pour les roues 11, actionné par une pédale, est également illustré ainsi qu'un élément de verrouillage 19 du support de charge relevé.

Les fourches 3 sont munies à leurs extrémités chacune d'un galet ou plusieurs galets 33 pivotants pouvant être bloqué en position basse ou haute de manière connue.

La fig. 4 représente plus particulièrement une vue en perspective de l'arrière du même engin avec le support de charge relevé. On distingue ici les deux pieds stabilisateurs 20 avec leurs moyens de roulement 21. Ces pieds peuvent coulisser horizontalement grâce à des galets 23 de roulement cylindriques fixés sous le bâti 1 et s'étendre ainsi vers l'arrière. L'élément 22 est l'élément de liaison des pieds stabilisateurs.

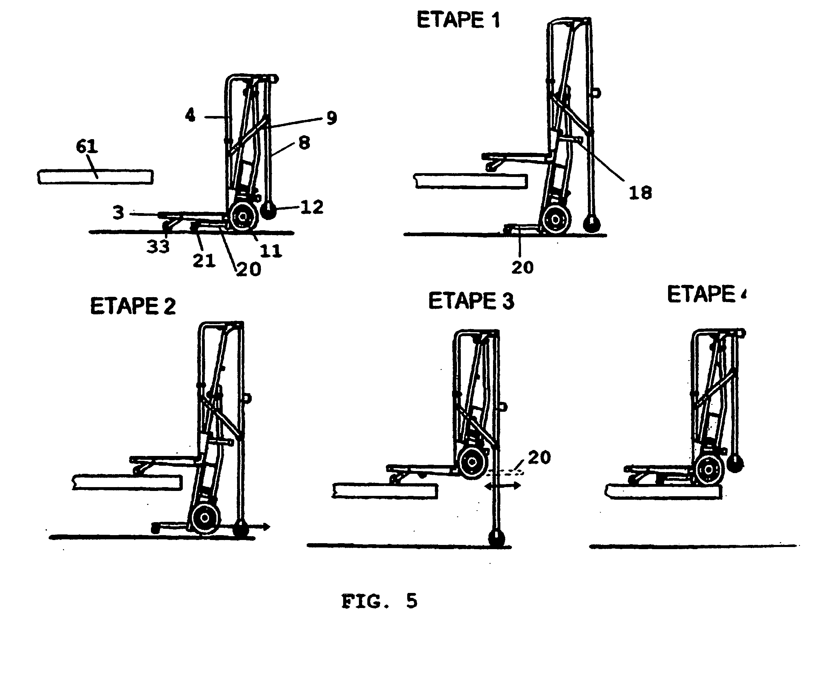

La fig. 5 représente schématiquement sous la forme d'une séquence le chargement et l'autogrimpage par l'avant de l'engin selon l'invention. Le support de charge 6, est levé avec le bâti coulissant à hauteur d'une plateforme 61 en 2, avancée en 3 sur cette plateforme le support de charge prenant appui sur celle-ci, les pieds stabilisateurs sont alors ramenés vers l'arrière du bâti en 4, la béquille en extension est déployée manuellement jusqu'à contact avec le sol, le moteur remonte le bâti fixe à hauteur de la plateforme 61 en 6, les pieds stabilisateurs repassent sous la plaque de support en 7, et l'ensemble est avancé sur la plate-forme avec rétraction de la béquille téléscopique. L'engin est alors libre d'évoluer sur la plate-forme ( ou le plancher d'un véhicule) de manière classique.
De manière générale et autrement dit, on distingue quatre groupe de manoeuvres représentés dans les schémas de la fig. 5

Au départ, la machine est en appui sur le chassis fixe, les fourches étant légèrement levées et les galets d'extrémité des fourches sont bloqués en position basse.
Etape 1. Mise à niveau du bâti mobile
   a) sur le plateau de chargement : en faisant monter les fourches, on positionne les galets d'extrémité des fourches juste au-dessus du plateau de chargement, et on avance celles-ci au dessus de ce plateau
   b) simultanément au positionnement des fourches à hauteur du plateau de chargement, on positionne la béquille arrière de telle façon qu'elle puisse se déployer descendre librement lorsque les fourches montent. Une fois les fourches en position, il suffit de relever très légèrement la béquille et de la bloquer en position basse.
   Une autre possibilité est de débloquer le système de blocage de la béquille, au moment où, ou juste avant que les fourches ne soient à hauteur désirée.
Etape 2. Mise en appui du bâti mobile (support de fourches) sur le plateau de chargement et au niveau du sol
   La remontée légère du chassis fixe dans le chassis mobile provoque la prise d'appui quasi simultanée à l'avant du galet des fourches sur le plateau, et à l'arrière de la béquille sur le sol. Si le plateau de chargement est celui d'un véhicule, la prise d'appui avant comprime les amortisseurs du véhicule et fait ainsi descendre légèrement le plateau de chargement.
Etape 3. Elévation du chassis fixe à hauteur des fourches La remontée du chassis fixe permet de libérer les roues situées à l'extrémité des pieds stabilisateurs ce qui permet de tirer vers l'arrière les pieds stabilisateurs, puis de les repousser vers l'avant lorsque le chassis est à hauteur des fourches en position levée.
Etape 4. Avancement de l'engin sur le plateau de chargement

On dépose le roues principales (pneumatiques) de l'engin sur le plateau de chargement et ont relève complètement la béquille arrière.

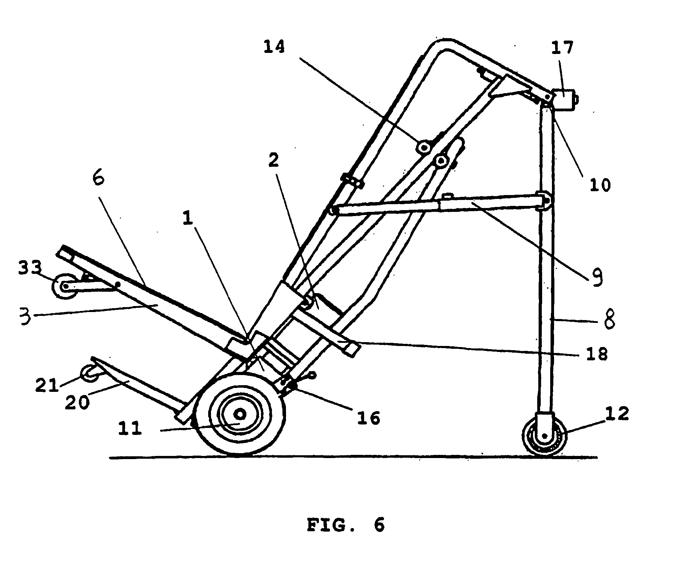

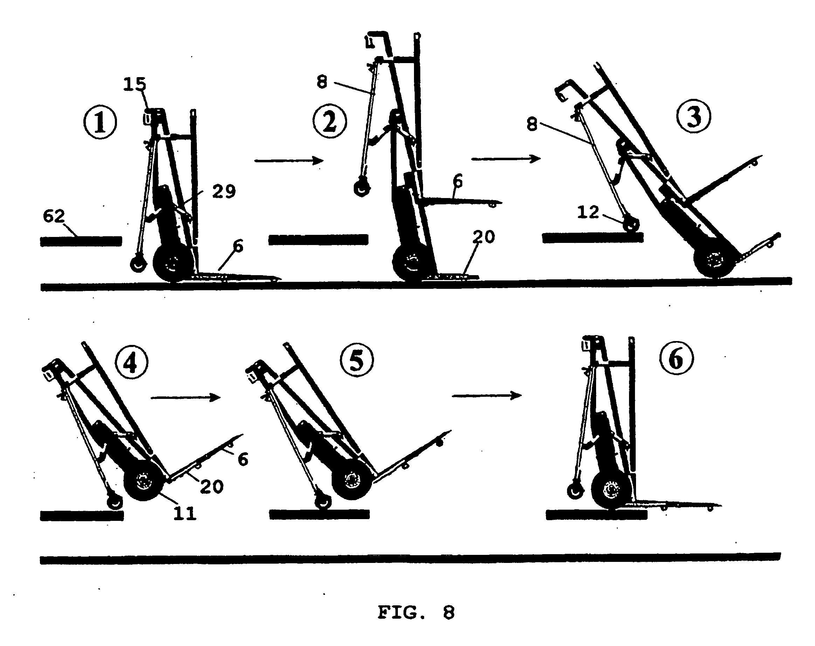

La fig. 6 représente l'engin vu de profil en position "diable supporté" avec le support de charge 6 partiellement levé et la béquille déployée vers l'arrière, c'est à dire avec la liaison télescopique déployée au maximum. On distingue notamment le tube d'appui 18 destiné à servir de butée à la béquille pour diminuer le porte à faux lorsque, par exemple pour monter une marche par l'arrière (voir p.e. fig. 8, étape 3), tout le poids de l'engin repose sur la béquille arrière inclinée.

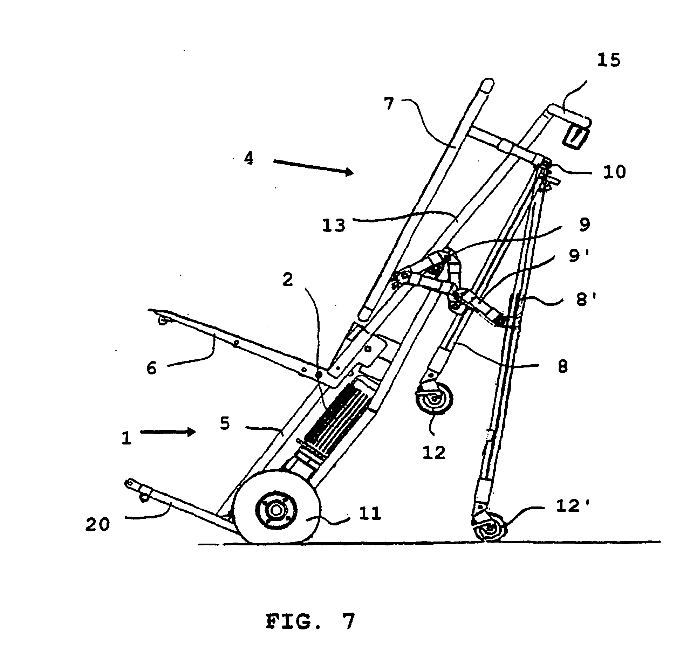

La fig. 7 est une vue latérale d'un engin selon une variante de réalisation, la liaison 9, 9' entre le chassis coulissant et la béquille présentant une articulation centrale. Le support de charge 6 est levé. La béquille télescopique 8 est illustrée déployée en position arrière maximum 8' et rentrée en position repliée 8.

La fig. 8 représente schématiquement sous la forme d'une séquence l'autogrimpage d'une marche par l'arrière pour une variante de l'engin similaire à la fig. 7. La machine en 1 peut ou non être chargée. Dans un premier temps, en 2, le bâti coulissant est levé. En 3, la béquille arrière y solidarisée, de préférence orientée juste à l'arrière des grandes roues 11 du chassis fixe, mais avec son système télescopique rentré, sert de support pour effectuer le pivotement autour de sa base. En 4, le bâti coulissant est alors ramené vers le bâti fixe par un mouvement inverse de celui illustré en 2, l'ensemble de l'engin reposant sur l'extrémité de la béquille. Cette extrémité peut rouler sur la surface supérieure en 5, ce qui permet de ramener en 6 la base du bâti fixe sur cette surface pour y reposer et libérer l'extrémité de la béquille du poids d l'engin.

On notera que le principe de l'autogrimpage par l'arrière peut également être appliqué pour grimper plusieurs marches en prenant appui avec la béquille arrière à la marche directement supérieure à celle à grimper, pour pouvoir déposer la machine sur celle-ci, et en répétant l'opération autant de fois que nécessaire. Plusieurs marches peuvent évidemment être montées en une seule opération.

On comprendra que par rapport à un gerbeur classique, l'utilisation de roues principales sous forme de pneumatiques présente l'avantage de permettre le déplacement "tout terrain" car, en utilisation de type diable, les galets des fourches, sources de freinage ou blocage sur surface p.e. de gravier, ne sont plus en contact avec le sol.

Avantageusement, le moyen de roulement prévu à la base de la béquille arrière ne sera pas constitué de simples galets mais bien de roues de dimensions telles qu'elles permettent le déplacement en position diable "supportée" sur tout type de surface.

En résumé l'invention propose un engin de manutention extrêmement polyvalent qui permet son utilisation dans n'importe quelle situation.

On notera que pour s'adapter à chacune des situations particulières de charge à déplacer sur des sols divers, l'engin dispose de trois trains de roulage
- le premier train de roulage (position gerbeur) est prévu pour le déplacement sur un sol lisse et dur (train de roulage du chassis fixe roues 11, galets 21,
- le second train de roulage (position diable, roues 11 et 12) avec ou sans appui sur la béquille arrière est prévu pour le déplacement en tout chemin et pour l'autogrimpage arrière.
- le troisième train de roulage est prévu pour permettre l'auto-grimpage avant (appui sur les roues 12 de la béquille arrière et sur les galets de roulement 33 situés à l'extrémité des fourches.

## Revendications

1. Engin de manutention et de levage de charge comprenant un bâti (4) présentant un support de charge (6) et un moyen de roulement (33), et coulissant sur un bâti fixe (1) muni d'au moins deux roues et muni d'un système de levage du bâti coulissant le long d'un chemin de guidage (5) prévu sur ledit bâti fixe, l'ensemble étant susceptible d'être poussé ou tiré par un opérateur et d'être basculé autour d'un axe desdites roues, le bâti fixe étant également muni à sa base de deux pieds stabilisateurs (20) munis de roulettes (21) de préférence pivotantes et s'étendant en direction du support de charge (6), lesdits pieds stabilisateurs (20) pouvant coulisser sous le bâti fixe (1), **caractérisé en ce que** le bâti coulissant (4) est solidarisé directement ou indirectement à une béquille télescopique (8) opposée au support de charge et comprenant au moins une roue pivotante (12) à son extrémité.

2. Engin selon la revendication 1 dans lequel le chemin de guidage est incliné par rapport à la perpendiculaire d'un angle compris entre 5 et 25°.

3. Engin selon la revendication 1 ou 2 dans lequel la béquille télescopique est orientable.

4. Engin selon n'importe laquelle des revendications précédentes dans lequel le système de levage est motorisé.

5. Engin selon n'importe laquelle des revendications précédentes dans lequel la roue pivotante de la béquille comprend un moyen de blocage d'orientation.

6. Engin selon n'importe laquelle des revendications précédentes dans lequel l'orientation et le télescopage de la béquille peuvent être indépendamment contrôlée et dans lequel des moyens de blocage de ladite orientation ou dudit télescopage sont prévus.

7. Engin selon la revendication précédente dans lequel la béquille est solidarisée au bâti coulissant par une articulation et/ou une liaison coulissante.

8. Procédé d'autogrimpage d'un engin selon la revendication 1 comprenant les étapes suivantes
- le support (6) est levé avec le bâti coulissant à hauteur d'une plateforme (61)
- le support est avancé sur cette plateforme puis prend appui sur celle-ci,
- les pieds stabilisateurs sont alors ramenés vers l'arrière du bâti
- la béquille en extension est déployée manuellement ou par effet de gravité jusqu'à contact avec le sol,
- le bâti fixe est monté à hauteur de la plateforme (61)
- les pieds stabilisateurs repassent sous la plaque de support ,
- l'ensemble est avancé sur la plate-forme avec rétraction de la béquille téléscopique.

## Patentansprüche

1. Lastförder- und Hubvorrichtung, die ein einen Lastträger (6) und ein Fahrwerk (33) aufweisendes Gestell (4) umfasst, und auf einem feststehenden Gestell (1) verschiebbar ist, das mit mindestens zwei Rädern und einem für das entlang einer Führung (5) verschiebbare Gestell vorgesehenen Hubsystem versehen ist, wobei die gesamte Anordnung durch einen Bedienungsmann geschoben oder gezogen und um eine Achse der genannten Räder geschwenkt werden kann, wobei das feststehende Gestell an seiner Basis ebenfalls mit zwei zur Stabilisierung dienenden Füßen (20) versehen ist, die vorzugsweise schwenkbar ausgebildete und sich in Richtung des Lastträgers (6) erstreckende Rollen (21) aufweisen, wobei die genannten zur Stabilisierung dienenden Füße (20) unter dem feststehenden Rahmen (1) verschiebbar sind, **dadurch gekennzeichnet, dass** das verschiebbare Gestell (4) mittelbar oder unmittelbar mit einer teleskopisch ausgebildeten Stütze (8) verbunden ist, die gegenüber dem Lastträger angeordnet ist und mindestens ein schwenkbares Rad (12) à ihrem Ende aufweist.

2. Vorrichtung nach Anspruch 1, bei der die Führungsbahn im Verhältnis zu der Senkrechten um einen zwischen 5 und 25° liegenden Winkel geneigt ist.

3. Vorrichtung nach Anspruch 1 oder 2, bei der die teleskopisch ausgebildete Stütze in ihrer Orientierung verstellbar ist.

4. Vorrichtung nach irgendeinem der vorangegangenen Ansprüche, bei der das Hubsystem motorisiert ist.

5. Vorrichtung nach irgendeinem der vorangegangenen Ansprüche, bei der das schwenkbare Rad der Stütze eine Vorrichtung zum Arretieren der Ausrichtung umfasst.

6. Vorrichtung nach irgendeinem der vorangegangenen Ansprüche, bei der die Ausrichtung und das Ausziehen bzw. Zusammenschieben der Stütze unabhängig kontrolliert werden können, und bei der Vorrichtungen zum Arretieren der genannten Ausrichtung bzw. des genannten Ausziehens bzw. Zusammenschiebens vorgesehen sind.

7. Vorrichtung nach dem vorangegangenen Anspruch, bei der die Stütze mit dem verschiebbaren Gestell mittels eines Gelenks und / oder einer gleitenden Verbindung gekoppelt ist.

8. Verfahren zum selbsttätigen Aufsteigen einer Vorrichtung nach Anspruch 1, das folgende Schritte umfasst:
- der Träger (6) wird mit dem verschiebbaren Gestell zur Höhe einer Plattform (61) gehoben,
- der Träger wird vorwärts auf dieser Plattform geführt und legt sich dann auf diese,
- die zur Stabilisierung dienenden Füße werden dann zu dem hinteren Bereich des Gestell zurückgeführt,
- die ausfahrende Stütze wird manuell oder durch die Auswirkung der Schwerkraft gestreckt, bis sie mit dem Boden in Berührung kommt,
- das feststehende Gestell wird zur Höhe der Plattform (61) gehoben,
- die zu Stabilisierung dienenden Füße fahren zurück unter die Trageplatte,
- die gesamte Anordnung wird auf der Plattform vorwärts bewegt unter Zusammenschieben der teleskopisch ausgebildeten Stütze.

## Claims

1. Handling and lifting machine for burdens comprising a frame (4) fitted with a load support member (6) and rolling means (33), and sliding on the fixed frame (1) which is provided with at least two wheels and with a lifting system of the sliding frame along the guide rails (5) formed on said fixed frame, the whole arrangement being able to be pushed or pulled by an operator and to be pivoted about an axis of said wheels, the fixed frame being also provided at its lower portion with two stabilizizig feet (20) fitted with rollers (21) preferably pivotable, and extending in the direction of the load support member (6), said stabilizing feet (20) being able to slide under the fixed frame (1), **characterized in that** the sliding frame (4) is attached directly or indirectly to a telescopic prop (8) opposite to the load support member and comprising at least one pivotable roller (12) at its end.

2. Machine according to claim 1 wherein the guide rail is inclined in relation to the perpendicular, by an angle of between 5 and 25°.

3. Machine according to claim 1 or 2 wherein the telescopic prop is orientable.

4. Machine according to claim 1 or 2 wherein the lifting system comprised a motor.

5. Machine according to any of the preceding claims wherein the pivotable roller of the prop comprises a means for locking the orientation.

6. Machine according to any of the preceding claims wherein the orientation and the telescoping action of the prop may be independently controlled and wherein locking means of said orientation or of said telescopic action are foreseen.

7. Machine according to the preceding claim wherein the prop is attached to the sliding frame by an articulated member and/or a sliding link.

8. A process for auto-lifting of a machine according to claim 1 comprising the following steps
- the support means (6) is lifted with the sliding frame up to the height of a platform (61)
- the support is moved forward on the platform then rests thereon
- the stabilizing feet are then retracted towards the rear of the frame
- the extended prop is unfolded manually or by gravity action until in contact with the ground.
- the fixed frame is lifted up to the height of the platform (61)
- the stabilizing feet come back under the support plate,
- the whole system is moved forward on the platform with retraction of the telescopic prop.
